# EUROPÄISCHE PATENTSCHRIFT

(11) **EP 3 851 685 B1**
(45) Veröffentlichungstag und Bekanntmachung des Hinweises auf die Patenterteilung: **21.09.2022**
(21) Anmeldenummer: 21150820.5
(22) Anmeldetag: 11.01.2021
(51) Int. Cl.: F16B 13/12

(54) **SPREIZDÜBEL**
EXPANSION DOWEL
CHEVILLE À EXPANSION

(30) Priorität: 14.01.2020 DE 102020100616
(43) Veröffentlichungstag der Anmeldung: 21.07.2021
(73) Patentinhaber: fischerwerke GmbH & Co. KG, 72178 Waldachtal (DE)
(72) Erfinder: Daly, Aaron, 72285 Pfalzgrafenweiler (DE)
(74) Vertreter: Suchy, Ulrich Johannes

(56) Entgegenhaltungen:
- EP-B1- 1 730 409
- WO-A1-2008/000372
- WO-A1-2019/198112

## Beschreibung

Die Erfindung betrifft einen Spreizdübel mit den Merkmalen des Oberbegriffs des Anspruchs 1. Gattungsgemäße Spreizdübel werden durch Einbringen eines stiftförmigen Spreizelements, meist einer Schraube, aufgespreizt, und lassen sich dadurch in einem Ankerloch in einem Ankergrund verankern.

Die Patentanmeldung WO 2008/000372 A1 offenbart einen Spreizdübel aus Kunststoff mit einem sich in einer Längsrichtung des Spreizdübels entlang seiner Längachse erstreckenden Spreizabschnitt, der zwei einander gegenüberliegende, sich in der Längsrichtung erstreckende Spreizschenkel aufweist, die durch radial zum Spreizdübel gesehen V-förmige Verbinder an einem Umfang des Spreizdübels verbunden sind. An Verbindungsstellen an ihren Enden gehen die Verbinder einstückig in die Spreizschenkel über. Mittelebenen der "V's" befinden sich in einer Längsmittelebene des Spreizdübels. Zum Aufspreizen wird eine Schraube in den bekannten Spreizdübel eingeschraubt, die die Spreizschenkel und die Verbinder auseinander drückt und durch Aufbiegen der "V's", im Sinne einer Vergrößerung eines Winkels zwischen Schenkeln des "V's", die Verbinder in einer Umfangsrichtung des Spreizdübels streckt, so dass die Verbinder die Spreizschenkel auch bei aufgespreiztem Spreizdübel verbinden.

Das Patent EP 1 730 409 B1 offenbart einen Spreizdübel mit V-förmigen und S-förmigen Schlitzen in einer Umfangswand des Spreizabschnitts des Spreizdübels. Die S-förmigen Schlitze überlappen einander in einer Längsrichtung des Spreizdübels, wodurch S-förmige Verbinder gebildet sind. Zwischen den V-förmigen Schlitzen sind V-förmige Verbinder ausgebildet. Die Verbinder bewegen beziehungsweise verformen sich beim Aufspreizen des Spreizdübels so, dass sie sich in einer Umfangsrichtung des Spreizdübels verlängern.

Aufgabe der Erfindung ist, ein Spreiz- und Tragverhalten eines Spreizdübels zu verbessern.

Diese Aufgabe wird erfindungsgemäß durch einen Spreizdübel mit den Merkmalen des Anspruchs 1 gelöst. Der erfindungsgemäße Spreizdübel weist einen Spreizabschnitt auf, bei dem es sich um einen Längsabschnitt des Spreizdübels handelt. Im Spreizabschnitt weist der erfindungsgemäße Spreizdübel Spreizschenkel auf, die sich in einer Längsrichtung entlang einer Längsachse des Spreizdübels erstrecken. Insbesondere weist der Spreizdübel mindestens zwei einander gegenüberliegende Spreizschenkel auf. Durch Einbringen eines stiftförmigen Spreizelements in den Spreizdübel zwischen die Spreizschenkel werden die Spreizschenkel auseinander, also voneinander weggedrückt, was als "Aufspreizen" des Spreizdübels bezeichnet wird. Das stiftförmige Spreizelement kann beispielsweise eine Schraube, ein Schraubnagel oder eine Schraube sein. Beim Aufspreizen vergrößert sich ein Abstand der Spreizschenkel voneinander.

Die Spreizschenkel des erfindungsgemäßen Spreizdübels sind durch verformbare Verbinder miteinander verbunden. Die Verbinder sind insbesondere einstückig mit den Spreizschenkeln. Die Verbinder verlaufen nicht ausschließlich in Umfangsrichtung oder einer Sehnenrichtung des Spreizdübels, sondern sie weisen Verbinderabschnitte auf, die in der Längsrichtung beziehungsweise in Längsmittelebenen des Spreizdübels oder schräg in einem Winkel zu der Längsrichtung beziehungsweise zu den Längsmittelebenen des Spreizdübels verlaufen. Werden die Spreizschenkel beim Aufspreizen des Spreizdübels voneinander wegbewegt, werden die Verbinder gestreckt, das heißt, beim Aufspreizen des Spreizdübels bewegen die sich voneinander entfernenden Spreizschenkel die Verbinder in der Umfangsrichtung des Spreizdübels, so dass die Verbinder die Spreizschenkel auch bei aufgespreiztem Spreizdübel verbinden. Dabei verformen sich die Verbinder insbesondere so, dass Verbindungsabschnitte, die bei nicht aufgespreiztem Spreizdübel in der Längsrichtung beziehungsweise in einer Längsmittelebene des Spreizdübels oder in einem Winkel zu dieser Richtung verlaufen, durch die Verformung der Verbinder sich so bewegen, dass der Winkel zwischen der Längsachse beziehungsweise einer Längsmittelebene des Spreizdübels und einer Richtungskomponente dieser Verbinderabschnitte größer wird. Dadurch erstrecken sich die genannten Verbinderabschnitte und damit auch die Verbinder insgesamt weiter in der Umfangsrichtung des Spreizdübels. Jeder Verbinder kann ein oder mehrere Verbinderabschnitte aufweisen. Insbesondere weist jeder Verbinder mindestens zwei Verbinderabschnitte auf, die miteinander verbunden sind. Insbesondere sind die Verbinderabschnitte einstückig.

Beim Aufspreizen des Spreizdübels durch Einbringen des stiftförmigen Spreizelements werden die Verbinderabschnitte der Verbinder nach außen gedrückt, also von der Längsachse wegbewegt. Dabei können die Verbinderabschnitte verformt werden und/oder um Schwenkachsen schwenken. Dabei müssen sich die Verbinderabschnitte nicht ausschließlich und/oder vollständig nach außen bewegen. Erfindungsgemäß weist die Bewegung auch eine Bewegungskomponente in der Längsrichtung des Spreizdübels auf. Die Verbinderabschnitte bewegen sich außer von der Längsachse weg nach außen auch in der Längsrichtung des Spreizdübels aufeinander zu. Benachbarte Verbinder, deren Verbinderabschnitte sich beim Aufspreizen des Spreizdübels aufeinander zu bewegen, bilden einander zugeordnete Paare von Verbindern. Beim Aufspreizen verkürzt sich der der axiale, also der in Längsrichtung des Spreizdübels gemessene Abstand der Verbinderabschnitte der einander zugeordneten Paare von Verbindern. Hierdurch üben die Verbinderabschnitte der Verbinder des aufgespreizten Spreizdübels nicht nur eine radial von der Längsachse weg gerichtete Druckkraft auf eine Lochwand eines Ankerlochs aus, in dem der Spreizdübel aufgespreizt wird, sondern es wirkt zudem eine weitere Druckkraft in der Längsrichtung des Spreizdübels lokal zwischen den Verbinderabschnitten der einander zugeordneten Verbinder, die sich beim Aufspreizen aufeinander zu bewegt haben. Diese Druckkraft zwischen benachbarten, einander paarweise zugeordneten Verbindern des Spreizdübels bewirkt, dass die Lochwand des Ankerlochs lokal überdrückt und verfestigt wird, was insbesondere in Porenbeton oder anderen porösen Ankergründen geringer Festigkeit den Halt des aufgespreizten Spreizdübels im Ankerloch verbessert.

Vorzugsweise erstrecken sich Verbinderabschnitte der einander paarweise zugeordneten Verbinder bezüglich der Längsrichtung des Spreizdübels in entgegengesetzten Richtungen. Das heißt insbesondere, dass ein oder mehrere der Verbinderabschnitte benachbarter, einander zugeordneten Verbinder des erfindungsgemäßen Spreizdübels bezüglich der Längsrichtung des Spreizdübels voneinander weg orientiert sind, also dass sie sich bezüglich der Längsrichtung des Spreizdübels in entgegengesetzten Richtungen voneinander weg erstrecken. Die Verbinderabschnitte der einander zugeordneten Verbinder können sich von Verbindungsstellen, an denen die Verbinder in die Spreizschenkel übergehen, ausschließlich in entgegengesetzten Richtungen erstrecken. Vorzugsweise erstrecken sich die Verbinderabschnitte der einander paarweise zugeordneten Verbinder von den Verbindungsstellen der Verbinder mit den Spreizschenkeln aus in der Längsrichtung des Spreizdübels ausschließlich voneinander weg.

Die Verbinder weisen insbesondere mindestens zwei Verbinderabschnitte auf, die miteinander verbunden, insbesondere einstückig miteinander sind. Die Verbinderabschnitte eines ersten Verbinders der beiden zugeordneten Verbinder können sich aufeinander zu erstrecken und sich in einem Punkt treffen und miteinander verbunden sein, der vom zweiten der zugeordneten Verbinder weiter entfernt ist, als die Verbindungsstelle, an der der erste der beiden zugeordneten Verbinder in einen Spreizschenkel übergeht. Hierzu sind die beiden Verbinderabschnitte eines Verbinders bezüglich der Längsrichtung des Spreizdübels gleich orientiert, das heißt, sie erstrecken sich beide in Richtung des vorderen oder des hinteren Endes des Spreizdübels.

Vorzugsweise verlaufen die Verbinder von einem Spreizschenkel zu einem benachbarten Spreizschenkel mit mehreren Richtungsänderungen, die beispielsweise Kurven, Bögen, Ecken oder Abwinklungen sein können.

Durch Verformung der Verbinder im Bereich der Richtungsänderungen bewegen sich beim Aufspreizen des Spreizdübels Verbinderabschnitte zwischen den Richtungsänderungen, wobei sich benachbarte und durch eine Richtungsänderung verbundene Verbinderabschnitte in entgegengesetzten Richtungen bewegen können. Auf diese Weise verlängern sich die Verbinder beim Aufspreizen des Spreizdübels in der Umfangsrichtung des Spreizdübels und gleichen die Vergrößerung des Abstands der Spreizschenkel, die sie verbinden, aus.

In einer bevorzugten Ausgestaltung der Erfindung sind die benachbarten, einander zugeordneten Verbinder spiegelsymmetrisch zu einer Radialebene des Spreizdübels. Eine "Radialebene" ist hierbei eine gedachte Ebene, zu der die Längsachse des Spreizdübels eine Flächennormale bildet. Diese Ausgestaltung der Verbinder führt zu einem gleichmäßigen Aufspreizen des Spreizdübels.

Vorzugsweise sind die Verbinder, radial zur Längsachse auf den Spreizdübel gesehen, symmetrisch zu einer Längsmittelebene des Spreizdübels. Eine "Längsmittelebene" des Spreizdübels ist eine Ebene, in der die Längsachse des Spreizdübels liegt, wobei die Längsachse mittig im Spreizdübel vom hinteren zum vorderen Ende des Spreizdübels verläuft.

Vorzugsweise sind die Verbinder oder Teile der Verbinder, radial zur Längsachse auf den Spreizdübel gesehen, V-förmig, U-förmig, Ω-förmig oder S-förmig.

Vorzugsweise weist der Spreizdübel im Spreizabschnitt Schlitze zwischen den Verbindern und den Spreizschenkeln auf. Mit "Schlitze" sind insbesondere gestreckte Öffnungen gemeint, die aber nicht gerade verlaufen müssen, sondern gekrümmt, gebogen oder abgewinkelt verlaufen können.

Bei einer bevorzugten Ausgestaltung weist der erfindungsgemäße Spreizdübel Längsschlitze auf, die an ihren Enden von benachbarten Schlitzen übergriffen sind, wobei die benachbarten Schlitze vorzugsweise bogenförmig sind. "Übergreifen" meint hier, dass der Längsschlitz und die benachbarten Schlitze in Umfangsrichtung zueinander versetzt in der gleichen Radialebene liegen. Zwischen den Längsschlitzen und den benachbarten Schlitzen sind die Verbinder beziehungsweise Verbinderabschnitte der Verbinder ausgebildet.

Eine Ausgestaltung der Erfindung sieht bogenförmige Längsschlitze im Spreizabschnitt des Spreizdübels vor, die in der Längsrichtung des Spreizdübels hintereinander angeordnet sind. Vorzugsweise sind die Längsschlitze abwechselnd in entgegengesetzten Umfangsrichtungen orientiert, das heißt, aufeinander folgende Längsschlitze weisen entgegengesetzte Krümmungen auf.

Weitere Ausgestaltungen der Erfindung weisen T-förmige oder kreuzförmige Schlitze im Spreizabschnitt des Spreizdübels auf, die sich in der Längsrichtung und in der Querrichtung des Spreizdübels erstrecken und deren in die Längsrichtung weisenden Enden von C-förmigen und/oder H-förmigen Schlitzen umschlossen sind, die die Enden der T-förmigen oder kreuzförmige Schlitze in der Längsrichtung des Spreizdübels übergreifen.

Eine Ausgestaltung der Erfindung sieht Längsschlitze im Spreizabschnitt des Spreizdübels vor, deren Enden von X-förmigen oder V-förmigen Schlitzen umschlossen sind, die symmetrisch zur Längsrichtung beziehungsweise zu einer Längsmittelebene des Spreizdübels angeordnet sind und die die Enden der Längsschlitze in der Längsrichtung des Spreizdübels übergreifen.

Die vorgenannten Schlitzformen und Anordnungen der Schlitze im Spreizabschnitt des Spreizdübels haben sich als günstig hinsichtlich des Spreizverhaltens des Spreizdübels erwiesen.

Die vorstehend in der Beschreibung genannten Merkmale und Merkmalskombinationen, Ausführungen und Ausgestaltungen der Erfindung, insbesondere die vorgenannten Schlitzformen und Anordnungen der Schlitze im Spreizabschnitt, sowie die nachfolgend in der Figurenbeschreibung genannten und/oder in einer Figur gezeichneten Merkmale und Merkmalskombinationen sind nicht nur in der jeweils angegebenen oder gezeichneten Kombination, sondern auch in grundsätzlich beliebigen anderen Kombinationen oder aber einzeln verwendbar. Es sind Ausführungen der Erfindung möglich, die nicht alle Merkmale eines abhängigen Anspruchs aufweisen. Auch können einzelne Merkmale eines Anspruchs durch andere offenbarte Merkmale oder Merkmalskombinationen ersetzt werden. Ausführungen der Erfindung, die nicht alle Merkmale des oder der Ausführungsbeispiele, sondern einen grundsätzlich beliebigen Teil der gekennzeichneten Merkmale eines Ausführungsbeispiels gegebenenfalls in Kombination mit einem, mehreren oder allen Merkmalen eines oder mehrerer weiterer Ausführungsbeispiele aufweisen, sind möglich.

Die Erfindung wird nachfolgend anhand in der Zeichnung dargestellter Ausführungsbeispiele näher erläutert. Es zeigen:
- Figur 1: ein erstes Ausführungsbeispiel eines erfindungsgemäßen Spreizdübels in Seitenansicht;
- Figur 2: eine vergrößerte Darstellung eines Teils des Spreizabschnitts des Spreizdübels aus Figur 1;
- Figur 3: den Teil des Spreizabschnitts aus Figur 2 in aufgespreiztem Zustand;
- Figur 4: den Teil des Spreizabschnitts aus Figur 2 in einer um 90° um eine Längsachse des Spreizdübels gedrehten Ansicht; und
- Figuren 5 bis 9: Teile von Spreizabschnitten abgewandelter Spreizdübel gemäß der Erfindung in Figur 2 entsprechenden Darstellungen.

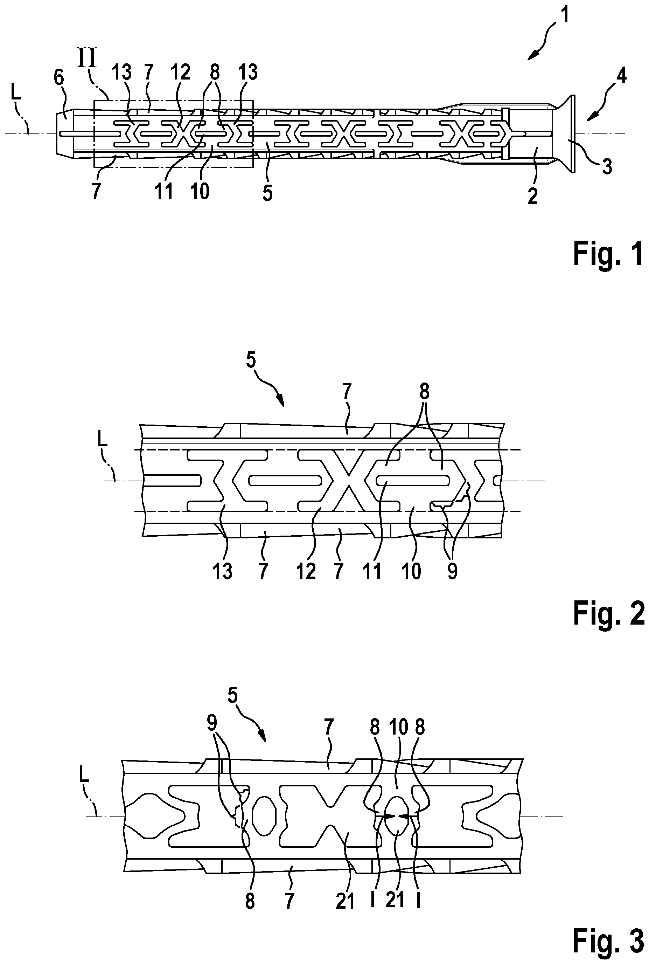

Der in Figur 1 dargestellte, erfindungsgemäße Spreizdübel 1 besteht im Ausführungsbeispiel aus Kunststoff, wobei andere Werkstoffe, beispielsweise Metall, möglich sind. Er weist einen rohrförmigen Hohlschaft 2 mit einer trichterförmigen Aufweitung 3 an einem Ende auf, das hier als hinteres Ende 4 bezeichnet wird. An einem gegenüberliegenden Ende geht der Hohlschaft 2 einstückig in einen Spreizabschnitt 5 über, der hier bis zu einem vorderen Ende 6 des Spreizdübels 1 reicht, allgemein aber auch mit Abstand von dem vorderen Ende 6 enden kann. Als "vorderes Ende 6" wird hier das dem hinteren Ende 4 gegenüberliegende Ende des Spreizdübels 1 bezeichnet. Der Spreizdübel 1 erstreckt sich von seinem hinteren Ende 3 entlang seiner Längsachse L in Längsrichtung bis zu seinem vorderen Ende 6. Im Spreizabschnitt 5 verengt sich ein den Hohlschaft 2 durchsetzendes axiales Loch in einem innenliegenden axialen Spreizkanal (nicht dargestellt). Durch das Einbringen eines nicht dargestellten, stiftförmigen Spreizelements, wie beispielsweise einer Schraube, vom hinteren Ende 4 durch den Hohlschaft 2 in den Spreizabschnitt 5 bis zum vorderen Ende 6 lässt sich der Spreizabschnitt 5 des Spreizdübels 1 zur Verankerung in einem nicht dargestellten, zylindrischen Ankerloch aufspreizen.

Im Spreizabschnitt 5 weist der Spreizdübel 1 zwei einander gegenüberliegende, in einer Längsrichtung des Spreizdübels 1 verlaufende Spreizschenkel 7 auf, die durch verformbare Verbinder 8 einstückig miteinander verbunden sind. In der Vergrößerung der Figur 2 sind die Spreizschenkel 7 mit Strichlinien abgegrenzt. Anders als gezeichnet müssen die Spreizschenkel 7 nicht achsparallel, sondern können beispielsweise auch wellenförmig, zick-zack-förmig oder wendelförmig verlaufen. Der Spreizdübel 1 kann auch mehr als zwei Spreizschenkel 7 aufweisen, die gleichmäßig oder ungleichmäßig über den Umfang verteilt angeordnet und am Umfang durch Verbinder 8 verbunden sind (nicht dargestellt). Die Verbinder 8 sind so angeordnet und ausgebildet, dass sie sich durch Verformung in der Umfangsrichtung des Spreizdübels 1 verlängern können, wenn die Spreizschenkel 7 ihren Abstand voneinander durch Aufspreizen des Spreizdübels 1 vergrößern, so dass die Verbinder 8 die Spreizschenkel 7 auch dann verbinden, wenn die Spreizschenkel 7 beziehungsweise der Spreizdübel 1 aufgespreizt sind.

Die Verbinder 8 sind am Umfang des Spreizdübels 2 angeordnet und verlaufen zwischen den Spreizschenkeln 7 nicht oder jedenfalls nicht ausschließlich in der Umfangsrichtung, sondern weisen Verbinderabschnitte 9 auf, die in der Längsrichtung des Spreizdübels 1, in einem spitzen Winkel zur Längsachse L des Spreizdübels 1 oder in einem Winkel von vorzugsweise nicht mehr als etwa 55° zur Längsrichtung des Spreizdübels 1 verlaufen. Diese Verbinderabschnitte 9 schwenken beziehungsweise bewegen sich beim Aufspreizen so, dass sich ihre Winkel zur Längsachse L des Spreizdübels 1 vergrößern und sich die Verbinder 8 in der Umfangsrichtung des Spreizdübels 1 verlängern, wenn sich die Spreizschenkel 7 beim Aufspreizen des Spreizdübels 1 voneinander weg bewegen. In Figur 3, die den Spreizabschnitt 5 des Spreizdübels 1 in aufgespreiztem Zustand zeigt, ist die Verformung der Verbinder 8 durch das Aufspreizen des Spreizdübels 1 zu sehen.

In Figuren 1 und 2 sind die Verbinder 8 radial zum Spreizdübel 1 gesehen U-förmig, wobei die Verbinder 8 in der Längsrichtung des Spreizdübels 1 abwechselnd voneinander weg und aufeinander zu gerichtet sind. Mittelebenen beziehungsweise Symmetrieebenen der "U's" befinden sich in einer Axialebene des Spreizdübels 1. Benachbarte Verbinder 8, die beziehungsweise deren Verbinderabschnitte 9 voneinander weg gerichtet sind, die sich also in der Längsrichtung des Spreizdübels 1 in entgegengesetzten Richtungen voneinander weg erstrecken, sind einander zugeordnet und bilden ein Paar. Durch das Aufspreizen weiten sich die "U's" zu "V's" auf. Die Verbinder 8 ändern ihre Richtung mehrfach im Verlauf zwischen den beiden Spreizschenkeln 7, die sie verbinden. Die benachbarten Verbinder 8 sind spiegelsymmetrisch zu einer gedachten Radialebene des Spreizdübels 1 in einer Mitte zwischen den benachbarten Verbindern 8.

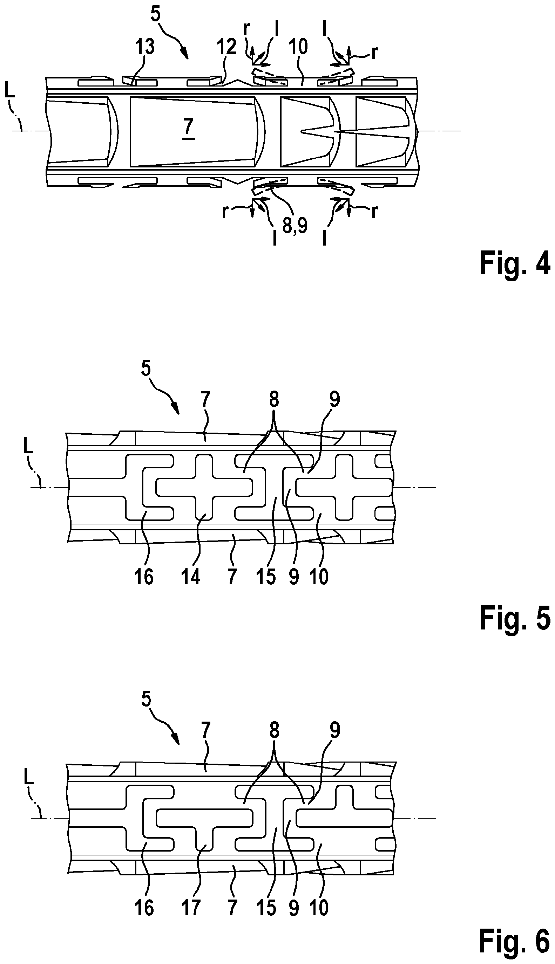

Außer sich in der Umfangsrichtung des Spreizdübels 1 zu verlängern, bewegen sich die Verbinderabschnitte 9 vom Spreizdübel 1 nach außen, wie es Figur 4 an zwei einander gegenüberliegenden Paaren einander benachbarter und zugeordneter Verbinder 8 mit Strichlinien zeigt. Die Verbinder 8 beziehungsweise deren Verbinderabschnitte 9 bewegen sich um Verbindungsstellen 10, an denen die Verbinder 8 einstückig in die Spreizschenkel 7 übergehen, die sie verbinden. Einander ferne Stellen oder Bereiche zweier einander zugeordneter Verbinder 8 bewegen sich, wie in Figur 4 mit Pfeilen r dargestellt, radial von der Längsachse L nach außen weg. Die einander fernen Stellen oder Bereiche der einander paarweise zugeordneten benachbarten Verbinder 8 befinden sich auf einander in der Längsrichtung des Spreizdübels 1 abgewandten Seiten der Verbindungsstellen 10, an denen die Verbinder 8 in die Spreizschenkel 7 übergehen.

Weil beim Bewegen der Verbinder 8 die einander fernen Stellen oder Bereiche der einander paarweise zugeordneten Verbinder 8 um die Verbindungsstellen 10 auf gebogenen Bahnen vom Spreizdübel 1 nach außen schwenken, bewegen sich die einander fernen Stellen oder Bereiche der einander paarweise zugeordneten Verbinder 8 auch in der Längsrichtung des Spreizdübels 1, was die Pfeile I in Figuren 3 und 4 zeigen. Dabei bewegen sich die einander fernen Stellen oder Bereiche der einander paarweise zugeordneten Verbinder 8 beziehungsweise deren Verbindungsabschnitte 9 in der Längsrichtung des Spreizdübels 1 aufeinander zu, verkürzen also ihren axialen Abstand voneinander. Bei einem Aufspreizen des Spreizdübels 1 in einem nicht dargestellten zylindrischen Ankerloch werden die einander fernen Stellen oder Bereiche der einander paarweise zugeordneten Verbinder 8 nicht nur radial nach außen gegen eine Lochwand gedrückt, sondern beaufschlagen die Lochwand des Ankerlochs auch in der Längsrichtung zwischen den einander zugeordneten Verbindern 8, und zwar mit aufeinander zu gerichteten Druckkräften. Diese Beaufschlagung der Lochwand des Ankerlochs mit Druckkräften verfestigt den Ankergrund und verbessert den Halt des Spreizdübels 1 im Ankerloch, insbesondere in einem porösen Ankergrund aus beispielsweise Porenbeton.

Zwischen den Verbindern 8 und den Spreizschenkeln 7 weist der Spreizdübel 1 in unverformtem, das heißt nicht aufgespreitzem Zustand im Spreizabschnitt 5 Schlitze 11, 12, 13 auf, die sich beim Aufspreizen, wie in Figur 3 zu sehen ist, zu flächenförmigen Öffnungen 21 aufweiten. Der Spreizdübel 1 aus den Figuren 1 und 2 weist Längsschlitze 11 in einer Axialebene und X-förmige Schlitze 12 zwischen den Längsschlitzen 11 auf, die Enden der Längsschlitze 11 in der Längsrichtung des Spreizdübels 1 übergreifen. An Enden des Spreizabschnitts 5 sind die Schlitze 13 Σ-förmig. Die Σ-förmigen Schlitze 13 übergreifen die Längsschlitze 11 ebenfalls.

Die Figuren 5 bis 9 zeigen Spreizabschnitte 5 abgewandelter erfindungsgemäßer Spreizdübel 1 in Figur 3 entsprechenden Darstellungen. In Figur 5 weist der Spreizdübel 1 kreuzförmige Schlitze 14 anstelle der Längsschlitze 11 in der Axialebene des Spreizdübels 1 und H-förmige Schlitze 15 zwischen den kreuzförmige Schlitzen 14 auf, die Enden der kreuzförmigen Schlitze 14 in der Längsrichtung des Spreizdübels 1 übergreifen. An Enden des Spreizabschnitts 5 weist der Spreizdübel 1 aus Figur 5 C-förmige Schlitze 16 auf, die die kreuzförmigen Schlitze 14 ebenfalls in der Längsrichtung des Spreizdübels 1 übergreifen. Die Verbinder 8 weisen in Figur 5 zwar eine etwas andere Form als in Figuren 1 und 2 auf, sind aber radial zum Spreizdübel 1 gesehen trotzdem U-förmig.

In Figur 6 weist der Spreizdübel 1 T-förmige Schlitze 17 anstelle der Längsschlitze 11 beziehungsweise der kreuzförmigen Schlitze 14 auf, wobei sich ein langes "Querhaupt" der T-förmige Schlitze 17 in der Axialebene des Spreizdübels 1 befindet und "Schäfte" abwechselnd in entgegengesetzten Umfangsrichtungen von den "Querhäuptern" abstehen. Wie in Figur 5 befinden sich zwischen den T-förmigen Schlitzen 17 H-förmige Schlitze 15, die Enden der "Querhäupter" der T-förmigen Schlitze 17 in der Längsrichtung des Spreizdübels 1 übergreifen. Auch in Figur 6 sind die Verbinder 8 U-förmig.

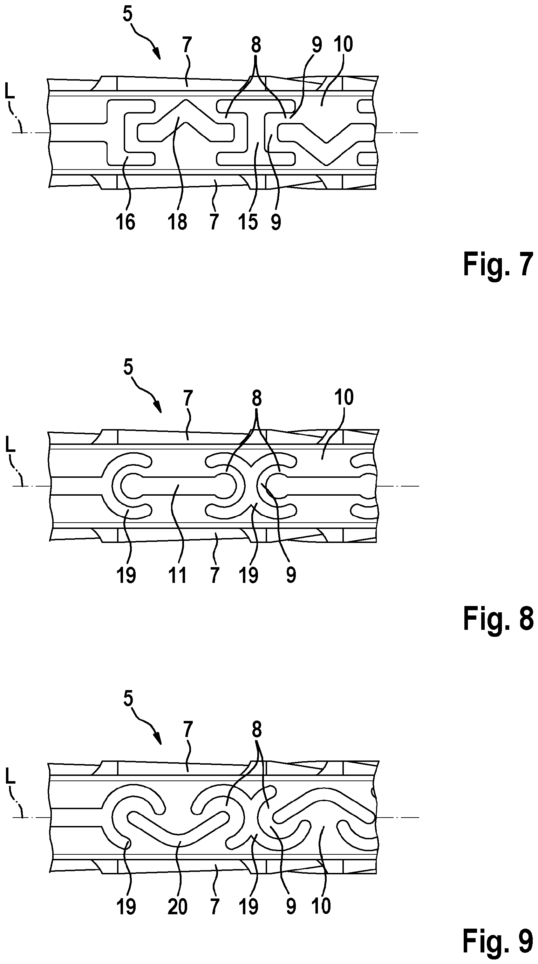

In Figur 7 weist der Spreizdübel 1 V-förmige Schlitze 18 anstelle der Längsschlitze 11 auf, wobei die "V's" nicht längs, sondern quer und abwechselnd entgegengesetzt orientiert zum Spreizdübel 1 angeordnet sind. Zwischen den V-förmigen Schlitzen 18 weist der Spreizdübel 1 aus Figur 7 wieder H-förmige Schlitze 15 auf, die Enden der V-förmigen Schlitze 18 in der Längsrichtung des Spreizdübels 1 übergreifen. Die zwischen den Schlitzen 16, 18 ausgebildeten Verbinder 8 sind auch hier U-förmig.

In Figur 8 weist der Spreizdübel 1 wie in Figuren 1 und 2 Längsschlitze 11 in einer Axialebene des Spreizdübels 1 auf, zwischen denen, anders als in Figuren 1 und 2, kreisbogenförmige Schlitze 19 angeordnet sind, die Enden der Längsschlitze 11 übergreifen, so dass die kreisbogenförmigen Schlitze 19 die Enden der Längsschlitze 11 in der Längsrichtung des Spreizdübels 1 übergreifen. Die zwischen den Schlitzen 19, 20 Verbinder 8 können als Ω-förmig angesehen werden. Die Schlitze 19 können auch eine andere Bogenform als die Kreisform aufweisen (nicht dargestellt).

In Figur 9 weist der Spreizdübel 1 bogenförmige Schlitze 20 anstelle der Längsschlitze 11 auf, die sich in der Längsrichtung des Spreizdübels 1 erstrecken und abwechselnd in entgegengesetzten Richtungen in der Umfangsrichtung des Spreizdübels 1 gewölbt sind. Wie in Figur 8 werden Enden der bogenförmigen Schlitze 20 in der Längsrichtung des Spreizdübels 1 von kreisbogenförmigen Schlitzen 19 übergriffen. Die zwischen den Schlitzen 19, 20 ausgebildeten Verbinder 8 können ebenfalls als Ω-förmig angesehen werden, wobei die "Ω's" abwechselnd entgegengesetzt schräg zur Längsrichtung des Spreizdübels 1 angeordnet sind.

Mit Ausnahme der geänderten Formen der Verbinder 8 und der Schlitze 11 bis 20 sind die Spreizdübel in Figuren 5 bis 9 gleich ausgebildet und spreizen in gleicher Weise wie zu Figuren 1 bis 4 beschrieben.

### Bezugszeichenliste

- 1: Spreizdübel
- 2: Hohlschaft
- 3: Aufweitung
- 4: hinteres Ende
- 5: Spreizabschnitt
- 6: vorderes Ende
- 7: Spreizschenkel
- 8: Verbinder
- 9: Verbinderabschnitt
- 10: Verbindungsstelle
- 11: Längsschlitz
- 12: X-förmiger Schlitz
- 13: Σ-förmiger Schlitz
- 14: kreuzförmiger Schlitz
- 15: H-förmiger Schlitz
- 16: C-förmiger Schlitz
- 17: T-förmiger Schlitz
- 18: V-förmiger Schlitz
- 19: kreisbogenförmiger Schlitz
- 20: bogenförmiger Längsschlitz
- 21: Öffnung
- L: Längsachse
- r, I: Pfeil

## Patentansprüche

1. Spreizdübel, der einen sich in einer Längsrichtung entlang einer Längsachse (L) des Spreizdübels (1) erstreckenden Spreizabschnitt (5) aufweist, der durch Einbringen eines stiftförmigen Spreizelements aufspreizbar ist, wobei der Spreizdübel (1) im Spreizabschnitt (5) sich in der Längsrichtung des Spreizdübels (1) erstreckende Spreizschenkel (7) aufweist, die sich beim Aufspreizen des Spreizdübels (1) voneinander entfernen, und die durch verformbare Verbinder (8) miteinander verbunden sind, wobei die Verbinder (8) Verbinderabschnitte (9) aufweisen, die beim Aufspreizen des Spreizdübels (1) sich so bewegen, dass sie sich weiter in der Umfangsrichtung des Spreizdübels (1) erstrecken als bei nicht aufgespreiztem Spreizdübel (1), so dass die Verbinder (8) die bei aufgespreiztem Spreizdübel (1) weiter voneinander entfernten Spreizschenkel (7) auch bei aufgespreiztem Spreizdübel (1) verbinden, **dadurch gekennzeichnet, dass** der Spreizdübel (1) einander paarweise zugeordnete, in der Längsrichtung des Spreizdübels (1) benachbarte Verbinder (8) aufweist, deren Verbinderabschnitte (9) sich beim Aufspreizen des Spreizdübels (1) bezüglich der Längsachse (L) des Spreizdübels (1) nach außen und aufeinander zu bewegen.

2. Spreizdübel nach Anspruch 1, **dadurch gekennzeichnet, dass** sich Verbinderabschnitte (9) der einander paarweise zugeordneten Verbinder (8) bezüglich der Längsrichtung des Spreizdübels (1) in entgegengesetzten Richtungen erstrecken.

3. Spreizdübel nach Anspruch 1 oder 2, **dadurch gekennzeichnet, dass** sich die Verbinderabschnitte (9) der einander paarweise zugeordneten Verbinder (8) von Verbindungsstellen (10) der Verbinder (8) mit den Spreizschenkeln (7) aus in der Längsrichtung des Spreizdübels (1) ausschließlich voneinander weg erstrecken.

4. Spreizdübel nach einem oder mehreren der Ansprüche 1 bis 3, **dadurch gekennzeichnet, dass** die Verbinder (8) von einem Spreizschenkel (7) zu einem benachbarten Spreizschenkel (7) mit mehreren Richtungsänderungen verlaufen.

5. Spreizdübel nach einem oder mehreren der vorhergehenden Ansprüche, **dadurch gekennzeichnet, dass** die benachbarten, einander zugeordneten Verbinder (8) spiegelsymmetrisch zu einer Radialebene des Spreizdübels (1) sind.

6. Spreizdübel nach einem oder mehreren der vorhergehenden Ansprüche, **dadurch gekennzeichnet, dass** die Verbinder (8), radial zur Längsachse (L) auf den Spreizdübel (1) gesehen, symmetrisch zu einer Längsmittelebene des Spreizdübels (1) sind.

7. Spreizdübel nach einem oder mehreren der vorhergehenden Ansprüche, **dadurch gekennzeichnet, dass** die Verbinder (8) oder Teile der Verbinder (8), radial zur Längsachse (L) auf den Spreizdübel (1) gesehen, V-förmig, U-förmig, Ω-förmig oder S-förmig sind.

8. Spreizdübel nach einem oder mehreren der vorhergehenden Ansprüche, **dadurch gekennzeichnet, dass** der Spreizdübel (1) im Spreizabschnitt (5) Schlitze (11 - 20) zwischen den Verbindern (8) und den Spreizschenkeln (7) aufweist.

9. Spreizdübel nach Anspruch 8, **dadurch gekennzeichnet, dass** der Spreizdübel (1) Längsschlitze (11, 14, 17, 18, 20) aufweist, die an ihren Enden von benachbarten Schlitzen (12, 13, 15, 16, 19) übergriffen sind.

10. Spreizdübel nach Anspruch 9, **dadurch gekennzeichnet, dass** der Spreizdübel (1) Längsschlitze (11) aufweist, deren Enden, in der Längsrichtung des Spreizdübels (1) von bogenförmigen Schlitzen (19) übergriffen sind.

11. Spreizdübel nach einem der Ansprüche 8 bis 10, **dadurch gekennzeichnet, dass** der Spreizdübel (1) im Spreizabschnitt (5) in seiner Längsrichtung hintereinander bogenförmige Längsschlitze (20) aufweist.

12. Spreizdübel nach Anspruch 11, **dadurch gekennzeichnet, dass** die bogenförmigen Längsschlitze (20) abwechselnd in entgegengesetzten Umfangsrichtungen des Spreizdübels (1) orientiert sind.

13. Spreizdübel nach einem der Ansprüche 8 bis 12, **dadurch gekennzeichnet, dass** der Spreizdübel (1) im Spreizabschnitt (5) T-förmige Schlitze (17) oder kreuzförmige Schlitze (14) aufweist, deren Querhaupt sich in der Längsrichtung des Spreizdübels (1) erstreckt und deren Enden von C-förmigen Schlitzen (16) und/oder H-förmigen Schlitzen (15) umschlossen sind, die die Enden der Querhäupter der T-förmigen Schlitze (17) oder kreuzförmigen Schlitze (14) in der Längsrichtung des Spreizdübels (1) übergreifen.

14. Spreizdübel nach einem der Ansprüche 8 bis 13, **dadurch gekennzeichnet, dass** der Spreizdübel (1) im Spreizabschnitt (5) Längsschlitze (11) aufweist, deren Enden von X-förmigen Schlitzen (12) oder V-förmigen Schlitzen (18) umschlossen sind, die symmetrisch zur Längsrichtung des Spreizdübels (1) angeordnet sind und die die Enden der Längsschlitze (11) in der Längsrichtung des Spreizdübels (1) übergreifen.

## Claims

1. Expansible fixing plug having an expansion portion (5) which extends in a longitudinal direction along a longitudinal axis (L) of the expansible fixing plug (1), which expansion portion is expansible by introduction of a pin-like expander element, wherein the expansible fixing plug (1) has, in the expansion portion (5), expansion limbs (7) extending in the longitudinal direction of the expansible fixing plug (1), which expansion limbs move away from one another during expansion of the expansible fixing plug (1) and which are connected to one another by deformable connectors (8), wherein the connectors (8) have connector portions (9) which move in such a way during expansion of the expansible fixing plug (1) that they extend further in the circumferential direction of the expansible fixing plug (1) than in the case of the non-expanded expansible fixing plug (1), so that the connectors (8) connect the expansion limbs (7), which are further apart from one another when the expansible fixing plug (1) has been expanded, even when the expansible fixing plug (1) has been expanded, **characterised in that** the expansible fixing plug (1) has paired mutually associated connectors (8) that are adjacent in the longitudinal direction of the expansible fixing plug (1), the connector portions (9) of which, during expansion of the expansible fixing plug (1), move outwards and towards one another in relation to the longitudinal axis (L) of the expansible fixing plug (1).

2. Expansible fixing plug according to claim 1, **characterised in that** connector portions (9) of the paired mutually associated connectors (8) extend in opposite directions in relation to the longitudinal direction of the expansible fixing plug (1).

3. Expansible fixing plug according to claim 1 or 2, **characterised in that** the connector portions (9) of the paired mutually associated connectors (8) extend exclusively away from one another in the longitudinal direction of the expansible fixing plug (1), starting from connection points (10) of the connectors (8) with the expansion limbs (7).

4. Expansible fixing plug according to one or more of claims 1 to 3, **characterised in that** the connectors (8) undergo several changes of direction in the course of running from one expansion limb (7) to an adjacent expansion limb (7).

5. Expansible fixing plug according to one or more of the preceding claims, **characterised in that** the adjacent, mutually associated connectors (8) are mirror-symmetrical with respect to a radial plane of the expansible fixing plug (1).

6. Expansible fixing plug according to one or more of the preceding claims, **characterised in that** the connectors (8) are symmetrical with respect to a longitudinal centre plane of the expansible fixing plug (1) when the expansible fixing plug (1) is viewed radially with respect to the longitudinal axis (L).

7. Expansible fixing plug according to one or more of the preceding claims, **characterised in that** the connectors (8) or parts of the connectors (8) are V-shaped, U-shaped, Ω-shaped or S-shaped when the expansible fixing plug (1) is viewed radially with respect to the longitudinal axis (L).

8. Expansible fixing plug according to one or more of the preceding claims, **characterised in that** the expansible fixing plug (1) has, in the expansion portion (5), slots (11 - 20) between the connectors (8) and the expansion limbs (7).

9. Expansible fixing plug according to claim 8, **characterised in that** the expansible fixing plug (1) has longitudinal slots (11, 14, 17, 18, 20) which are overlapped at their ends by adjacent slots (12, 13, 15, 16, 19).

10. Expansible fixing plug according to claim 9, **characterised in that** the expansible fixing plug (1) has longitudinal slots (11), the ends of which are overlapped by arc-shaped slots (19) in the longitudinal direction of the expansible fixing plug (1).

11. Expansible fixing plug according to any one of claims 8 to 10, **characterised in that** the expansible fixing plug (1) has, in the expansion portion (5), arc-shaped longitudinal slots (20) one after the other in its longitudinal direction.

12. Expansible fixing plug according to claim 11, **characterised in that** the arc-shaped longitudinal slots (20) are oriented alternately in opposite circumferential directions of the expansible fixing plug (1).

13. Expansible fixing plug according to any one of claims 8 to 12, **characterised in that** the expansible fixing plug (1) has, in the expansion portion (5), T-shaped slots (17) or cross-shaped slots (14), the crossbar of which extends in the longitudinal direction of the expansible fixing plug (1) and the ends of which are surrounded by C-shaped slots (16) and/or H-shaped slots (15) which overlap the ends of the crossbars of the T-shaped slots (17) or cross-shaped slots (14) in the longitudinal direction of the expansible fixing plug (1).

14. Expansible fixing plug according to any one of claims 8 to 13, **characterised in that** the expansible fixing plug (1) has, in the expansion portion (5), longitudinal slots (11), the ends of which are surrounded by X-shaped slots (12) or V-shaped slots (18) which are arranged symmetrically with respect to the longitudinal direction of the expansible fixing plug (1) and which overlap the ends of the longitudinal slots (11) in the longitudinal direction of the expansible fixing plug (1).

## Revendications

1. Cheville expansible munie d'une zone de déploiement (5) s'étendant dans une direction longitudinale, le long d'un axe longitudinal (L) de ladite cheville expansible (1), et pouvant être déployée par insertion d'un élément d'écartement en forme de broche, la cheville expansible (1) comportant, dans ladite zone de déploiement (5), des branches déployables (7) qui s'étendent dans la direction longitudinale de ladite cheville expansible (1), s'éloignent mutuellement lors du déploiement de ladite cheville expansible (1) et sont reliées mutuellement par des organes de liaison (8) déformables, lesquels organes de liaison (8) sont pourvus de tronçons de liaison (9) qui, lors dudit déploiement de la cheville expansible (1), se meuvent de manière à s'étendre davantage, dans la direction périphérique de la cheville expansible (1), qu'à l'état non déployé de ladite cheville expansible (1), de telle sorte que lesdits organes de liaison (8) relient, également à l'état déployé de ladite cheville expansible (1), les branches déployables (7) qui sont davantage éloignées mutuellement lorsque ladite cheville expansible (1) est à l'état déployé, **caractérisée par le fait que** ladite cheville expansible (1) comporte des organes de liaison (8) associés par paires les uns aux autres, voisins dans la direction longitudinale de ladite cheville expansible (1), et dont les tronçons de liaison (9) se meuvent vers l'extérieur et en direction les uns des autres, par rapport à l'axe longitudinal (L) de la cheville expansible (1), lors du déploiement de ladite cheville expansible (1).

2. Cheville expansible selon la revendication 1, **caractérisée par le fait que** des tronçons de liaison (9) des organes de liaison (8) associés par paires les uns aux autres s'étendent dans des directions opposées par rapport à la direction longitudinale de ladite cheville expansible (1).

3. Cheville expansible selon la revendication 1 ou 2, **caractérisée par le fait que** les tronçons de liaison (9) des organes de liaison (8) associés par paires les uns aux autres s'éloignent les uns des autres, dans la direction longitudinale de ladite cheville expansible (1), exclusivement à partir de zones de jonction (10) desdits organes de liaison (8) présentant les branches déployables (7).

4. Cheville expansible selon l'une ou plusieurs des revendications 1 à 3, **caractérisée par le fait que** les organes de liaison (8) s'étendent, avec plusieurs changements de direction, d'une branche déployable (7) à une branche déployable (7) voisine.

5. Cheville expansible selon l'une ou plusieurs des revendications précédentes, **caractérisée par le fait que** les organes de liaison (8) voisins, associés les uns aux autres, offrent une symétrie spéculaire par rapport à un plan radial de ladite cheville expansible (1).

6. Cheville expansible selon l'une ou plusieurs des revendications précédentes, **caractérisée par le fait que** les organes de liaison (8) sont symétriques par rapport à un plan médian longitudinal de la cheville expansible (1) en observant, dans le sens radial, vis-à-vis de l'axe longitudinal (L) de ladite cheville expansible (1).

7. Cheville expansible selon l'une ou plusieurs des revendications précédentes, **caractérisée par le fait que** les organes de liaison (8) ou des parties desdits organes de liaison (8) sont configuré(e)s en V, configuré(e)s en U, configuré(e)s en Ω ou configuré(e)s en S en observant, dans le sens radial, vis-à-vis de l'axe longitudinal (L) de ladite cheville expansible (1).

8. Cheville expansible selon l'une ou plusieurs des revendications précédentes, **caractérisée par le fait que** ladite cheville expansible (1) est dotée de fentes (11-20), dans la zone de déploiement (5), entre les organes de liaison (8) et les branches déployables (7).

9. Cheville expansible selon la revendication 8, **caractérisée par le fait que** ladite cheville expansible (1) est pourvue de fentes longitudinales (11, 14, 17, 18, 20) coiffées, à leurs extrémités, par des fentes (12, 13, 15, 16, 19) occupant des emplacements voisins.

10. Cheville expansible selon la revendication 9, **caractérisée par le fait que** ladite cheville expansible (1) est munie de fentes longitudinales (11) dont les extrémités sont coiffées, dans la direction longitudinale de ladite cheville expansible (1), par des fentes (19) configurées en arc de cercle.

11. Cheville expansible selon l'une des revendications 8 à 10, **caractérisée par le fait que** ladite cheville expansible (1) comporte, dans la zone de déploiement (5), des fentes longitudinales (20) configurées en arc de cercle et placées en succession dans sa direction longitudinale.

12. Cheville expansible selon la revendication 11, **caractérisée par le fait que** les fentes longitudinales (20) configurées en arc de cercle sont orientées, en alternance, dans des directions périphériques opposées de ladite cheville expansible (1).

13. Cheville expansible selon l'une des revendications 8 à 12, **caractérisée par le fait que** ladite cheville expansible (1) comporte, dans la zone de déploiement (5), des fentes (17) configurées en T ou des fentes cruciformes (14) dont la partie transversale s'étend dans la direction longitudinale de ladite cheville expansible (1), et dont les extrémités sont ceinturées par des fentes (16) configurées en C et/ou par des fentes (15) configurées en H qui coiffent, dans ladite direction longitudinale de la cheville expansible (1), les extrémités des parties transversales desdites fentes (17) configurées en T ou desdites fentes cruciformes (14).

14. Cheville expansible selon l'une des revendications 8 à 13, **caractérisée par le fait que** ladite cheville expansible (1) est munie, dans la zone de déploiement (5), de fentes longitudinales (11) dont les extrémités sont ceinturées par des fentes (12) configurées en X ou par des fentes (18) configurées en V, qui sont agencées symétriquement par rapport à la direction longitudinale de ladite cheville expansible (1), et qui coiffent les extrémités desdites fentes longitudinales (11) dans ladite direction longitudinale de la cheville expansible (1).
